# EUROPÄISCHE PATENTSCHRIFT

(11) **EP 3 628 078 B1**
(45) Veröffentlichungstag und Bekanntmachung des Hinweises auf die Patenterteilung: **24.02.2021**
(21) Anmeldenummer: 18746653.7
(22) Anmeldetag: 20.07.2018
(51) Int. Cl.: G05B 19/042, G05B 19/05, G05B 19/418, H04L 12/24

(54) **VERFAHREN ZUM BETRIEB EINES MEHRERE KOMMUNIKATIONSGERÄTE UMFASSENDEN KOMMUNIKATIONSNETZES EINES INDUSTRIELLEN AUTOMATISIERUNGSSYSTEMS UND STEUERUNGSEINHEIT**
METHOD FOR OPERATING A COMMUNICATION NETWORK COMPRISING MULTIPLE COMMUNICATION DEVICES OF AN INDUSTRIAL AUTOMATION SYSTEM AND CONTROL UNIT
PROCÉDÉ DE FONCTIONNEMENT D'UN RÉSEAU DE COMMUNICATION COMPRENANT PLUSIEURS APPAREILS DE COMMUNICATION D'UN SYSTÈME D'AUTOMATISATION INDUSTRIEL ET ORGANE DE COMMANDE

(30) Priorität: 28.07.2017 EP 17183729
(43) Veröffentlichungstag der Anmeldung: 01.04.2020
(73) Patentinhaber: Siemens Aktiengesellschaft, 80333 München (DE)
(72) Erfinder: SAKIC, Ermin, 81379 München (DE); ZIRKLER, Andreas, 85521 Ottobrunn (DE)
(86) Internationale Anmeldenummer: PCT/EP2018/069708
(87) Internationale Veröffentlichungsnummer: WO 2019/020500

(56) Entgegenhaltungen:
- EP-A1- 2 800 304
- WO-A1-2017/064560
- US-A1- 2014 211 661
- GOPALAKRISHNAN ABHILASH ET AL: "Industrial Automation System on Device (IndASoD) -A device modeling industrial automation scenarios", 2014 ANNUAL IEEE INDIA CONFERENCE (INDICON), IEEE, 11. Dezember 2014 (2014-12-11), Seiten 1-6, XP032732472, DOI: 10.1109/INDICON.2014.7030500

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Software Defined Networking (SDN) zielt auf eine Virtualisierung von Kommunikationsnetzfunktionen ab, indem Kommunikationsgeräte wie Router oder Switche funktionell in Control Plane und Data Plane zugeordnete Komponenten unterteilt werden. Die Data Plane umfasst Funktionen bzw. Komponenten zur Weiterleitung von Datenpaketen bzw. -rahmen. Die Control Plane umfasst hingegen Management-Funktionen zur Steuerung der Weiterleitung bzw. der Komponenten der Data Plane. Mit OpenFlow ist beispielsweise ein Standard für Software-implementierte Control Planes definiert. Eine Abstraktion von Hardware als virtuelle Services ermöglicht einen Verzicht auf eine manuelle Konfiguration der Hardware, insbesondere indem eine programmierbare, zentrale Steuerung von Netzverkehr geschaffen wird. OpenFlow unterstützt eine Partitionierung von System-Ressourcen in Network Slices, durch die unabhängig von anderen bestehenden Network Slices eine Bereitstellung definierter System-Ressourcen gewährleistet wird.

Aus US 2013/268686 A1 ist ein Verfahren zum Senden einer Anforderung eines Verbindungsaufbaus bekannt, bei dem ein OpenFlow-Switch eine Nachricht mit einer Parameteranforderung an einen Konfigurationsserver sendet, um Verbindungsparameter von einem OpenFlow-Controller zu erhalten. Auf die Nachricht mit der Parameteranforderung empfängt der OpenFlow-Switch eine IP-Adresse und einen Satz von OpenFlow-Verbindungsparametern vom Konfigurationsserver, wobei der Satz von OpenFlow-Verbindungsparametern zumindest Verbindungsparameter eines ersten OpenFlow-Controllers umfasst. Der OpenFlow-Switch sendet entsprechend der IP-Adresse und dem Satz von OpenFlow-Verbindungsparametern des ersten OpenFlow-Controllers eine Nachricht mit einer Anforderung eines Verbindungsaufbaus an den ersten OpenFlow-Controller. Auf diese Weise kann ein automatischer Verbindungsaufbau zwischen einem OpenFlow-Switch und einem OpenFlow-Controller realisiert werden.

DE 10 138 363 A1 offenbart ein Verfahren zur Gewährleistung der Dienstgüte von Internet-Anwendungen, bei dem Internet-Anwendungen unter Ausnutzung der zum Startzeitpunkt der Internet-Anwendung vorhandenen Ressourcen des IP-Zugangsnetzes und des Endsystems automatisch angepasst und optimiert werden. Von Internet-Anwendungen werden die QoS-Kommunikationsanforderungen (Quality of Service) an das IP-Zugangsnetz erfasst und als Anwendungsprofile gespeichert. Bei Aktivierung einer Internet-Anwendung werden die aktuell vorhandenen Netzressourcen des IP-Zugangsnetzes mit den gespeicherten Anwendungsprofilen verglichen, und es werden Steuerdaten ermittelt. Anhand der ermittelten Steuerdaten wird die Bereitstellung der Netzressourcen für die betreffende Internet-Anwendung optimiert. Die Optimierung bezieht sich dabei auf einen angepassten zeitlichen Ablauf und die Ermittlung der unter Kostenaspekten (Übertragungskosten) günstigsten Konstellation.

In EP 2 795 842 B1 ist eine Steuerungseinheit zur Bereitstellung von Kommunikationsdiensten innerhalb eines physikalischen Kommunikationsnetzes beschrieben. Diese Kommunikationsdienste werden durch mehrere auf Kommunikationsgeräten ablaufende Anwendungen genutzt, für die jeweils Anforderungen an die Kommunikationsdienste spezifiziert sind. Durch die Steuerungseinheit wird ein Kommunikationsnetzmodell erzeugt, das eine Topologie des physikalischen Kommunikationsnetzes wiedergibt und für jedes Kommunikationsgerät ein Netzknotenmodell umfasst. Das Netzknotenmodell beschreibt Funktionen und Ressourcen des jeweiligen Kommunikationsgeräts. Außerdem berechnet die Steuerungseinheit für jede auf den Kommunikationsgeräten ablaufende Anwendung ein virtuelles Kommunikationsnetz, indem die Anforderungen der jeweiligen Anwendung an die Kommunikationsdienste auf das Kommunikationsnetzmodell abgebildet werden. Die berechneten virtuellen Kommunikationsnetze umfassen jeweils zumindest 2 durch ein Netzknotenmodell beschriebene Netzknoten und eine Partition bzw. Network Slice ausgewählter Kommunikationsnetzressourcen, die durch die Kommunikationsgeräte bereitgestellt werden.

WO 2017/064560 A1 offenbart ein System für Software Defined Automation (SDA), das eine Vielzahl von speicherprogrammierbaren Steuerungen (SPS) und diesen übergeordnete und verteilt angeordnete Steuerungseinheiten umfasst. Die übergeordneten Steuerungseinheiten überwachen dabei Aktivitäten der speicherprogrammierbaren Steuerungen. Insbesondere überwachen die übergeordneten Steuerungseinheiten Programmsteuerungs-, Netzwerk- und Sicherheitsaspekte innerhalb eines ersten Sub-Systems, das mehrere speicherprogrammierbare Steuerungen als Komponenten umfasst. Bei Detektion einer Störung oder eines kritischen Ereignisses im ersten Sub-System wird zumindest eine Komponente des ersten Sub-Systems wieder in einen ordnungsgemäßen Zustand versetzt. Hierdurch wird auch eine Wiederherstellung korrespondierender Komponenten in einem zweiten und dritten Sub-System ausgelöst. Auf diese Weise werden die drei Sub-Systeme hinsichtlich ihrer Komponenten in einem kohärenten Zustand gehalten. Nachteilig ist jedoch, dass eine Störung in einem Sub-System Wiederherstellungsmaßnahmen in einem anderen, möglicherweise völlig ungestörten Sub-System auslöst, anstelle bestehende Redundanzen für einen unterbrechungsfreien Betrieb zu nutzen.

Der vorliegenden Erfindung liegt die Aufgabe zugrunde, ein Verfahren zum effizienten und zuverlässigen Betrieb eines zahlreiche Kommunikationsgeräte umfassenden Kommunikationsnetzes für ein industrielles Automatisierungssystem anzugeben, das eine ausfall- und manipulationssichere Steuerung von Kommunikationsgerätefunktionen durch übergeordnete Steuerungseinheiten ermöglicht, sowie eine Steuerungseinheit zur Durchführung des Verfahrens zu schaffen.

Diese Aufgabe wird erfindungsgemäß durch ein Verfahren mit den in Anspruch 1 genannten Merkmalen und durch eine Steuerungseinheit mit den in Anspruch 18 angegebenen Merkmalen gelöst. Vorteilhafte Weiterbildungen der vorliegenden Erfindung sind in den abhängigen Patentansprüchen angegeben.

Erfindungsgemäß steuern mehrere zueinander redundante Steuerungseinheiten Funktionen mehrerer zugeordneter Kommunikationsgeräte. Die zueinander redundanten Steuerungseinheiten umfassen identisch ausgestaltete und eingerichtete Zustandsautomaten, die in fehlerfreiem Zustand bei identischen Eingangsgrößen identische Ausgangsgrößen erzeugen. Vorzugsweise sind die Zustandsautomaten der zueinander redundanten Steuerungseinheiten replizierte Zustandsmaschinen (replicated state machines). Die Kommunikationsgeräte sind einem Software Defined Network zugeordnet, das eine als Control Plane bezeichnete Kommunikationssteuerungsebene und eine als Data Plane bezeichnete Datenübermittlungsebene umfasst. Dabei sind die Steuerungseinheiten der Control Plane zugeordnet sind, während die Kommunikationsgeräte der Data Plane zugeordnet sind.

Die Steuerungseinheiten ermitteln erfindungsgemäß für Benutzer-seitige Kommunikationsdienst-Anforderungen jeweils einen Pfad zwischen einem ersten Kommunikationsgerät an einem ersten Endknoten und einem zweiten Kommunikationsgerät an einem zweiten Endknoten über dritte Kommunikationsgeräte und überprüfen, ob entlang der ermittelten Pfade während einer geplanten Nutzungsdauer jeweils erforderliche Systemressourcen verfügbar sind. Bei einem positiven Überprüfungsergebnis reservieren die Steuerungseinheiten für die Kommunikationsdienst-Anforderungen jeweils erforderliche Systemressourcen und steuern Routing- oder Switching-Funktionen der dritten Kommunikationsgeräte entsprechend den ermittelten Pfaden. Die dritten Kommunikationsgeräte umfassen Router bzw. Switches. Durch die Steuerungseinheiten werden Flow-Tabellen vorgegeben, aus denen Routing-Tabellen bzw. Forwarding-Tabellen für den Steuerungseinheiten jeweils zugeordnete dritte Kommunikationsgeräte abgeleitet werden.

Die Kommunikationsgeräte übermitteln erfindungsgemäß kommunikationsspezifische Eingangsgrößen, beispielsweise Latenz-, Jitter-, Datenrate- bzw. Bandbreite-Messwerte bzw. Ereignismeldungen von Routern, Switches bzw. Access Points, an alle zugeordneten redundanten Steuerungseinheiten. Die durch die zueinander redundanten Steuerungseinheiten erzeugten Ausgangsgrößen werden auf Abweichungen zueinander überprüft, beispielsweise durch die zueinander redundanten Steuerungseinheiten bzw. durch die zugeordneten Kommunikationsgeräte. Bei Abweichungen erfolgt ein Umschalten auf Reserve-Steuerungseinheiten oder ein Deaktivieren von Steuerungseinheiten mit gegenüber einer Mehrheit von zueinander redundanten Steuerungseinheiten abweichenden Ausgangsgrößen.

Auf diese Weise ist eine Steuerung der Funktionen der Kommunikationsgeräte durch die Steuerungseinheiten gegenüber korrumpierten Eingangs- und Ausgangsgrößen der Steuerungseinheiten sowie gegenüber Ausfällen von Steuerungseinheiten gesichert. Insbesondere kann nahtlos und selektiv auf eine Nutzung von Steuerungseinheiten umgeschaltet werden, bei denen keine Störungen vorliegen. Auf diese Weise ergeben sich im Wesentlichen keine betrieblichen Unterbrechungen oder Verzögerungen bei einzelnen gestörten Steuerungseinheiten.

Die vorliegende Erfindung wird nachfolgend an einem Ausführungsbeispiel anhand der Zeichnung näher erläutert. Es zeigt
- Figur 1: ein mehrere Kommunikationsgeräte und drei zueinander redundante Steuerungseinheiten umfassendes Kommunikationsnetz eines industriellen Automatisierungssystems,
- Figur 2: ein mehrere Kommunikationsgeräte und zwei Paare zueinander redundanter Steuerungseinheiten umfassendes Kommunikationsnetz eines industriellen Automatisierungssystems.

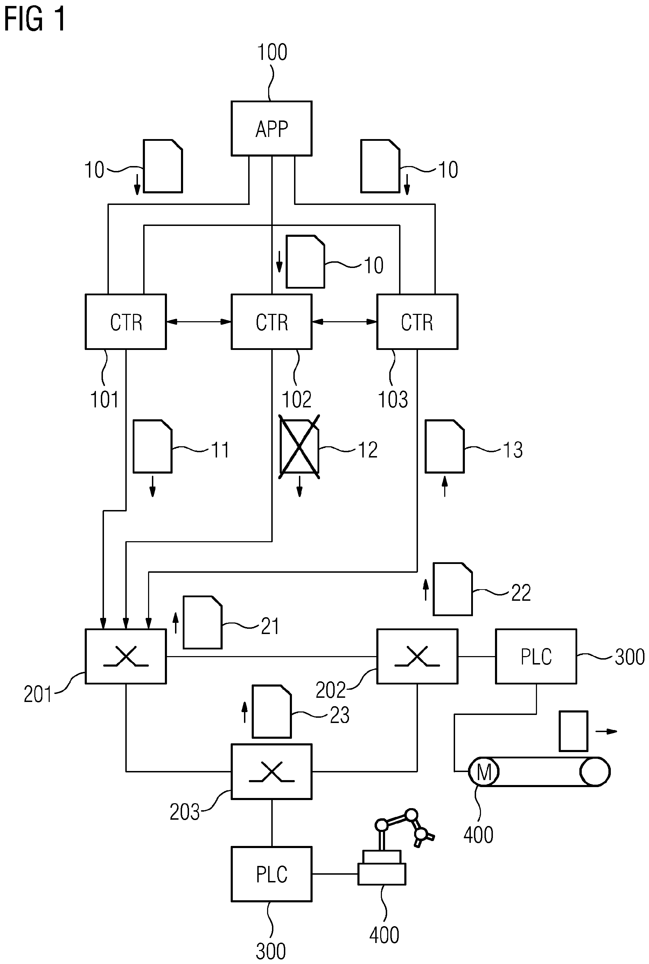

Das in Figur 1 dargestellte Kommunikationsnetz eines industriellen Automatisierungssystems umfasst mehrere Kommunikationsgeräte 201-203 und drei zueinander redundante Steuerungseinheiten 101-103, die den Kommunikationsgeräten 201-203 zugeordnet sind. Die Steuerungseinheiten 101-103 sind dafür ausgestaltet und eingerichtet, gemeinsam mit den jeweils anderen Steuerungseinheiten Funktionen der zugeordneten Kommunikationsgeräte 201-203 zu steuern. Dabei umfassen die zueinander redundanten Steuerungseinheiten 101-103 identisch ausgestaltete und eingerichtete Zustandsautomaten, die in fehlerfreiem Zustand bei identischen Eingangsgrößen identische Ausgangsgrößen 11-13 für zumindest ein ausgewähltes Kommunikationsgerät 201 erzeugen. Vorzugsweise sind die Zustandsautomaten der zueinander redundanten Steuerungseinheiten 101-103 replizierte Zustandsmaschinen. Vorzugsweise authentisieren sich die zueinander redundanten Steuerungseinheiten 101-103 gegenüber den zugeordneten Kommunikationsgeräten 201-203 und erhalten erst nach erfolgreicher Authentifizierung Steuerungszugriff auf die zugeordneten Kommunikationsgeräte 201-203.

Die Kommunikationsgeräte 201-203 können beispielsweise Switche, Router oder Firewalls sein und zum Anschluss von speicherprogrammierbaren Steuerungen 300 oder Ein-/Ausgabeeinheiten des industriellen Automatisierungssystems dienen. Speicherprogrammierbare Steuerungen 300 umfassen typischerweise jeweils ein Kommunikationsmodul, eine Zentraleinheit sowie zumindest eine Eingabe/Ausgabe-Einheit (I/O-Modul) und stellen somit ebenfalls Kommunikationsgeräte dar. Eingabe/Ausgabe-Einheiten können grundsätzlich auch als dezentrale Peripheriemodule ausgestaltet sein, die entfernt von einer speicherprogrammierbaren Steuerung angeordnet sind.

Über das Kommunikationsmodul ist eine speicherprogrammierbare Steuerung 300 beispielsweise mit einem Switch oder Router oder zusätzlich mit einem Feldbus verbunden. Die Eingabe/Ausgabe-Einheit dient einem Austausch von Steuerungs- und Messgrößen zwischen der speicherprogrammierbaren Steuerung 300 und einer durch die speicherprogrammierbare Steuerung 300 gesteuerten Maschine oder Vorrichtung 400. Die Zentraleinheit ist insbesondere für eine Ermittlung geeigneter Steuerungsgrößen aus erfassten Messgrößen vorgesehen. Obige Komponenten der speicherprogrammierbaren Steuerung 300 sind im vorliegenden Ausführungsbeispiel über ein Rückwandbus-System miteinander verbunden.

Die Kommunikationsgeräte 201-203 sind im vorliegenden Ausführungsbeispiel einem Software Defined Network (SDN) zugeordnet, das eine als Control Plane bezeichnete Kommunikationssteuerungsebene und eine als Data Plane bezeichnete Datenübermittlungsebene umfasst. Die Steuerungseinheiten 101-103 als SDN-Controller sind der Control Plane zugeordnet, während die Kommunikationsgeräte 201-203 der Data Plane zugeordnet sind. Durch die Steuerungseinheiten 101-103 werden beispielsweise Flow-Tabellen für Switche oder Router vorgegeben, aus denen Routing-Regeln bzw. Forwarding-Regeln für die den Steuerungseinheiten 101-103 zugeordneten Kommunikationsgeräte 201-203 abgeleitet werden.

Die Steuerungseinheiten 101-103 ermitteln insbesondere für Benutzer-seitige Kommunikationsdienst-Anforderungen 10 jeweils einen Pfad zwischen einem ersten Kommunikationsgerät 202 an einem ersten Endknoten und einem zweiten Kommunikationsgerät 203 an einem zweiten Endknoten über zumindest ein drittes Kommunikationsgerät 201. Dabei stellen der erste Endknoten und der zweite Endknoten Dienstzugangspunkte für die Benutzer-seitigen Kommunikationsdienst-Anforderungen 10 dar. Die Benutzer-seitigen Kommunikationsdienst-Anforderungen 10 werden beispielsweise von einer Anwendung oder Anwendungssteuerungseinheit 100 an die zueinander redundanten Steuerungseinheiten 101-103 übermittelt. Die Steuerungseinheiten 101-103 überprüfen, ob entlang der ermittelten Pfade während einer geplanten Nutzungsdauer jeweils erforderliche Systemressourcen verfügbar sind. Bei einem positiven Überprüfungsergebnis reservieren die Steuerungseinheiten 101-103 für die Kommunikationsdienst-Anforderungen 10 jeweils erforderliche Systemressourcen und steuern über ihre Ausgangsgrößen 11-13 Routing- oder Switching-Funktionen des zumindest einen dritten Kommunikationsgeräts 201 entsprechend den ermittelten Pfaden. Aus Gründen einer einfachen Darstellung umfasst das Kommunikationsnetz nur drei zu steuernde Kommunikationsgeräte 201-203. Das vorliegende Ausführungsbeispiel ist jedoch ohne weiteres auf komplexere, vermaschte Netztopologien mit einer Vielzahl dritter Kommunikationsgeräte übertragbar. Erfindungsgemäß übermitteln die Kommunikationsgeräte 201-203 kommunikationsspezifische Eingangsgrößen 21-23 an alle zugeordneten redundanten Steuerungseinheiten 101-103. Diese kommunikationsspezifischen Eingangsgrößen können beispielsweise Latenz-, Jitter-, Datenrate- bzw. Bandbreite-Messwerte oder Ereignismeldungen von Routern, Switches oder Access Points umfassen. Die durch die zueinander redundanten Steuerungseinheiten 101-103 erzeugten Ausgangsgrößen 11-13 werden auf Abweichungen zueinander überprüft. Bei Abweichungen erfolgt bei dem in Figur 1 dargestellten Kommunikationsnetz ein Deaktivieren von Steuerungseinheiten mit gegenüber einer Mehrheit von zueinander redundanten Steuerungseinheiten abweichenden Ausgangsgrößen erfolgt. Im vorliegenden Ausführungsbeispiel weicht beispielsweise die Ausgangsgröße 12 der Steuerungseinheit 102 von den identischen Ausgangsgrößen 11 und 13 der Steuerungseinheiten 101 und 103 ab. Daher wird in diesem Fall die Steuerungseinheit 102 deaktiviert. Ein Deaktivieren kann beispielsweise durch Ignorieren der Ausgangsgröße 12 im ausgewählten Kommunikationsgerät 201 bzw. durch Markieren eines entsprechenden Steuerungspfades von der Steuerungseinheit 102 zum ausgewählten Kommunikationsgerät 201 als unzuverlässig erfolgen. Vorzugsweise wird für einen als unzuverlässig markierten Steuerungspfad ein Ersatzpfad berechnet, so dass die Steuerungseinheit 102 ggf. wieder aktiviert werden kann. Dies setzt jedoch voraus, dass die Steuerungseinheit 102 grundsätzlich korrekte Ausgangsgrößen erzeugt. Dies kann beispielsweise durch die beiden anderen Steuerungseinheiten 101 und 103 überprüft werden.

Die durch die zueinander redundanten Steuerungseinheiten 101-103 erzeugten Ausgangsgrößen 11-13 können entweder durch die zugeordneten Kommunikationsgeräte 201-203, insbesondere durch das ausgewählte Kommunikationsgerät 201, oder selbständig durch die Steuerungseinheiten 201-203 auf Abweichungen überprüft werden. In entsprechender Weise kann das Deaktivieren der Steuerungseinheit 102 mit gegenüber der Mehrheit der zueinander redundanten Steuerungseinheiten - hier Steuerungseinheit 101 und Steuerungseinheit 103 - abweichender Ausgangsgröße 12 entweder durch die zugeordneten Kommunikationsgeräte oder selbständig durch die Steuerungseinheiten erfolgen.

Vorzugsweise gleichen die zueinander redundanten Steuerungseinheiten 101-103 untereinander von den zugeordneten Kommunikationsgeräten 201-203 empfangene Eingangsgrößen ab. Analog zum Vorgehen bei den Ausgangsgrößen werden Steuerungseinheiten mit gegenüber einer Mehrheit der zueinander redundanten Steuerungseinheiten abweichenden Eingangsgrößen vorteilhafterweise deaktiviert. Auch hier kann ein Deaktivieren durch Markieren eines entsprechenden Pfades vom jeweiligen Kommunikationsgerät zur betroffenen Steuerungseinheit als unzuverlässig erfolgen. Falls möglich, wird für einen als unzuverlässig markierten Pfad ein Ersatzpfad berechnet, insbesondere wenn kein Fehler in der betroffenen Steuerungseinheit vorliegt. Die Steuerungseinheiten mit gegenüber der Mehrheit von zueinander redundanten Steuerungseinheiten abweichenden Eingangsgrößen deaktivieren sich vorteilhafterweise selbständig, beispielsweise indem eine Erzeugung von Ausgangsgrößen eingestellt oder ausgesetzt wird.

Das Kommunikationsnetz entsprechend Figur 1 kann beispielsweise in mehrere Partitionen unterteilt werden, die vorgebbare Anteile an Systemressourcen der Kommunikationsgeräte 201-203 umfassen, die der jeweiligen Partition zugeordnet sind. In diesem Fall ermitteln die Steuerungseinheiten 101- 103 für Benutzer-seitige Kommunikationsdienst-Anforderungen innerhalb der dem jeweiligen Benutzer zugeordneten Partition jeweils einen Pfad zwischen einem ersten Kommunikationsgerät an einem ersten Endknoten und einem zweiten Kommunikationsgerät an einem zweiten Endknoten über dritte Kommunikationsgeräte. Dementsprechend überprüfen die Steuerungseinheiten 101-103, ob entlang der ermittelten Pfade innerhalb der dem jeweiligen Benutzer zugeordneten Partition während einer geplanten Nutzungsdauer jeweils erforderliche Systemressourcen verfügbar sind. Die Partitionen sind insbesondere Network Slices, die mittels eines Engineering-Systems manuell durch einen Systemadministrator oder automatisiert festgelegt werden. Für jede Steuerungseinheit 101-103 ist vorzugsweise jeweils eine separate Ressourcensicht mit den Anteilen an Systemressourcen vorgesehen.

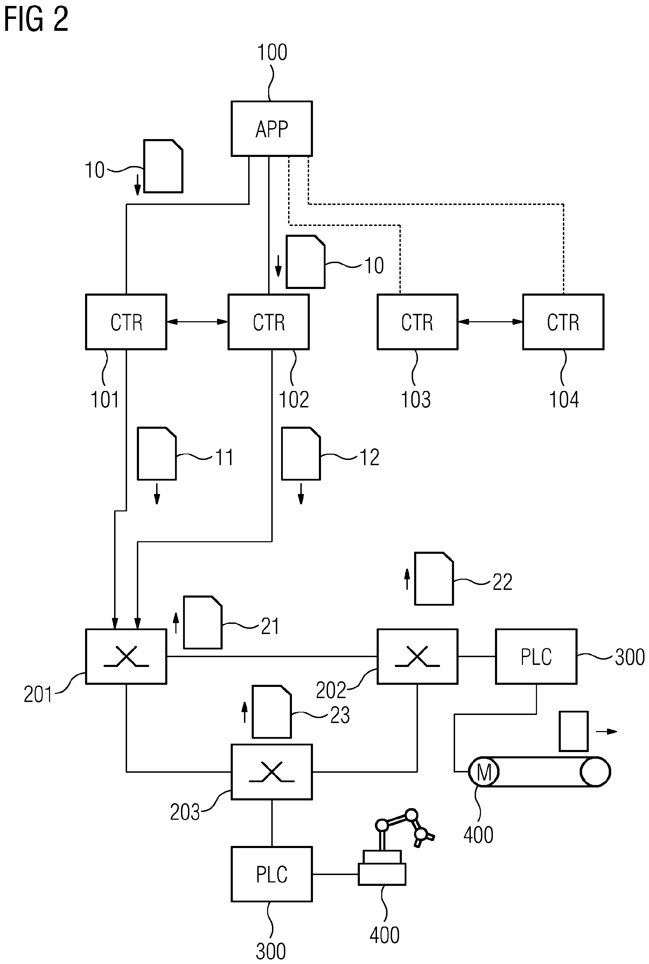

Beim Kommunikationsnetz entsprechend Figur 2 sind im Unterschied zum in Figur 1 dargestellten Kommunikationsnetz zwei Paare zueinander redundanter Steuerungseinheiten 101-102, 103-104 vorgesehen. Dabei wird zunächst ein Paar zueinander redundanter Haupt-Steuerungseinheiten 101-102 aktiviert. Bei Abweichungen der durch die zueinander redundanten Haupt-Steuerungseinheiten 101-102 erzeugten Ausgangsgrößen erfolgt ein Umschalten vom Paar zueinander redundanter Haupt-Steuerungseinheiten 101-102 auf ein Paar zueinander redundanter Reserve-Steuerungseinheiten 103-104. Vorzugsweise überwachen sich die zueinander redundanten Haupt-Steuerungseinheiten 101-102 gegenseitig auf unterschiedliche Eingangs- bzw. Ausgangsgrößen und deaktivieren sich bei festgestellten Abweichungen selbständig. Darüber hinaus schalten die zugeordneten Kommunikationsgeräte 201-203 vorteilhafterweise bei abweichenden Ausgangsgrößen 11-12 der zueinander redundanten Haupt-Steuerungseinheiten 101-102 bzw. bei einer durch die zueinander redundanten Haupt-Steuerungseinheiten 101-102 signalisierten Selbst-Deaktivierung von den Haupt-Steuerungseinheiten 101-102 auf die Reserve-Steuerungseinheiten 103-104 um. Des weiteren werden den Kommunikationsgeräten 201-203 jeweils zugeordnete Paare von zueinander redundanten Haupt-Steuerungseinheiten 101-102 entsprechend dem vorliegenden Ausführungsbeispiel in eine Liste ("History") eingetragen. In die Liste eingetragene ehemalige Haupt-Steuerungseinheiten werden vorzugsweise von einer Verwendung als Reserve-Steuerungseinheiten für die jeweiligen Kommunikationsgeräte ausgeschlossen.

Die Ausgangsgrößen 11-12 der zueinander redundanten Haupt-Steuerungseinheiten 101-102 werden zur paarweise gegenseitigen Überwachung vorteilhafterweise über jeweils zumindest 2 disjunkte Pfade zur jeweils anderen Haupt-Steuerungseinheit übermittelt. Die Haupt-Steuerungseinheit 101 übermittelt beispielsweise ihre Ausgangsgröße 11 über Pfad A und über Pfad B, während die Haupt-Steuerungseinheit 102 ihre Ausgangsgröße 12 über Pfad C und über Pfad D übermittelt. Die Pfade A-D sind dabei disjunkt.

Wenn beispielsweise die über Pfad A übermittelte Ausgangsgröße 11 mit der über Pfad B übermittelten Ausgangsgröße 11 sowie mit der über Pfad C übermittelten Ausgangsgröße 12 übereinstimmt und lediglich die über Pfad D übermittelte Ausgangsgröße 12 hiervon abweicht, kann Pfad D durch die Haupt-steuerungseinheit 101 als fehlerbehafteter Pfad erkannt werden. In diesem Fall würde noch keine Selbst-Deaktivierung der Haupt-Steuerungseinheiten 101-102 eingeleitet, da sie grundsätzlich korrekte und übereinstimmende Ausgangsgrößen 11-12 erzeugen. Allgemein bleiben die zueinander redundanten Haupt-Steuerungseinheiten 101-102 vorzugsweise aktiviert, solange sie über zumindest einen Pfad mit den eigenen Ausgangsgrößen übereinstimmende Ausgangsgrößen der jeweils anderen Haupt-Steuerungseinheit empfangen.

Darüber hinaus werden die Ausgangsgrößen 11-12 der zueinander redundanten Haupt-Steuerungseinheiten 101-102 vorzugsweise über jeweils zumindest 2 disjunkte Pfade je Haupt-Steuerungseinheit zu den zugeordneten Kommunikationsgeräten 201-203 übermittelt. Die Haupt-Steuerungseinheit 101 übermittelt beispielsweise ihre Ausgangsgröße 11 über Pfad E und über Pfad F an das ausgewählte Kommunikationsgerät 201, während die Haupt-Steuerungseinheit 102 ihre Ausgangsgröße 12 über Pfad G und über Pfad H an das ausgewählte Kommunikationsgerät 201 übermittelt. Die Pfade E-H sind dabei disjunkt.

Wenn beispielsweise die über Pfad E übermittelte Ausgangsgröße 11 mit der über Pfad H übermittelten Ausgangsgröße 12 übereinstimmt und lediglich die über Pfad F übermittelte Ausgangsgröße 11 sowie über Pfad G übermittelte Ausgangsgröße 12 hiervon abweichen, können die Pfade F und G durch das ausgewählte Kommunikationsgerät 201 als fehlerbehaftete Pfade erkannt werden. Dies gilt allerdings nur dann, wenn sich die über Pfad F übermittelte Ausgangsgröße 11 und die über Pfad G übermittelte Ausgangsgröße 12 voneinander unterscheiden. Nur in diesem Fall kann das ausgewählte Kommunikationsgerät 201 die über Pfad E übermittelte Ausgangsgröße 11 sowie die über Pfad H übermittelte Ausgangsgröße 12 als korrekte Ausgangsgrößen der Haupt-Steuerungseinheiten 101-102 behandeln. Allgemein können die zueinander redundanten Haupt-Steuerungseinheiten 101-102 für das ausgewählte Kommunikationsgerät 201 aktiviert bleiben, solange das ausgewählte Kommunikationsgerät 201 über zumindest 2 Pfade übereinstimmende Ausgangsgrößen beider Haupt-Steuerungseinheiten und über die übrigen Pfade jeweils voneinander abweichende Ausgangsgrößen empfängt. Dies würde jedoch beispielsweise nicht zutreffen, wenn die über Pfad F übermittelte Ausgangsgröße 11 und die über Pfad G übermittelte Ausgangsgröße 12 in obigem Beispiel übereinstimmen. Unterscheiden, also bei folgender Konstellation:
*Ausgangsgröße 11 (Pfad E)= Ausgangsgröße 12 (Pfad H)="alpha" UND*
*Ausgangsgröße 11 (Pfad F)= Ausgangsgröße 12 (Pfad G) ="beta"*

In diesem Fall stößt das ausgewählte Kommunikationsgerät 201 ein Umschalten von den Haupt-Steuerungseinheiten 101-102 auf die Reserve-Steuerungseinheiten 103-104 an, wobei die Haupt-Steuerungseinheiten 101-102 deaktiviert werden.

## Patentansprüche

1. Verfahren zum Betrieb eines mehrere Kommunikationsgeräte umfassenden Kommunikationsnetzes eines industriellen Automatisierungssystems, bei dem
- mehrere zueinander redundante Steuerungseinheiten (101-103; 101-102, 103-104) Funktionen mehrerer zugeordneter Kommunikationsgeräte (201-203) steuern, wobei die zueinander redundanten Steuerungseinheiten identisch ausgestaltete und eingerichtete Zustandsautomaten umfassen, die in fehlerfreiem Zustand bei identischen Eingangsgrößen identische Ausgangsgrößen (11-13; 11-12) erzeugen, wobei die Kommunikationsgeräte (201-203) einem Software Defined Network zugeordnet sind, das eine als Control Plane bezeichnete Kommunikationssteuerungsebene und eine als Data Plane bezeichnete Datenübermittlungsebene umfasst, und wobei die Steuerungseinheiten (101-103; 101-102, 103-104) der Control Plane zugeordnet sind und die Kommunikationsgeräte (201-203) der Data Plane zugeordnet sind,
- die Steuerungseinheiten (101-103; 101-102, 103-104) für Benutzer-seitige Kommunikationsdienst-Anforderungen (10) jeweils einen Pfad zwischen einem ersten Kommunikationsgerät an einem ersten Endknoten und einem zweiten Kommunikationsgerät an einem zweiten Endknoten über dritte Kommunikationsgeräte ermitteln, wobei die dritten Kommunikationsgeräte Router und/oder Switches umfassen und durch die Steuerungseinheiten (101-103; 101-102, 103-104) Flow-Tabellen vorgeben werden, aus denen Routing-Tabellen und/oder Forwarding-Tabellen für den Steuerungseinheiten jeweils zugeordnete dritte Kommunikationsgeräte abgeleitet werden,
- die Steuerungseinheiten (101-103; 101-102, 103-104) überprüfen, ob entlang der ermittelten Pfade während einer geplanten Nutzungsdauer jeweils erforderliche Systemressourcen verfügbar sind,
- die Steuerungseinheiten (101-103; 101-102, 103-104) für die Kommunikationsdienst-Anforderungen (10) jeweils bei einem positiven Überprüfungsergebnis erforderliche Systemressourcen reservieren und Routing- oder Switching-Funktionen der dritten Kommunikationsgeräte entsprechend den ermittelten Pfaden steuern,
- die Kommunikationsgeräte (201-203) kommunikationsspezifische Eingangsgrößen (21-23) an alle zugeordneten redundanten Steuerungseinheiten (101-103; 101-102, 103-104) übermitteln,
- die durch die zueinander redundanten Steuerungseinheiten (101-103; 101-102, 103-104) erzeugten Ausgangsgrößen (11-13; 11-12) auf Abweichungen zueinander überprüft werden,
- bei Abweichungen ein Umschalten auf Reserve-Steuerungseinheiten (103-104) oder ein Deaktivieren von Steuerungseinheiten (102) mit gegenüber einer Mehrheit von zueinander redundanten Steuerungseinheiten (101, 103) abweichenden Ausgangsgrößen (12) erfolgt.

2. Verfahren nach Anspruch 1,
bei dem die Zustandsautomaten der zueinander redundanten Steuerungseinheiten (101-103; 101-102, 103-104) replizierte Zustandsmaschinen sind.

3. Verfahren nach einem der Ansprüche 1 oder 2,
bei dem die durch die zueinander redundanten Steuerungseinheiten (101-103; 101-102, 103-104) erzeugten Ausgangsgrößen (11-13; 11-12) durch die zugeordneten Kommunikationsgeräte (201-203) oder selbständig durch die Steuerungseinheiten auf Abweichungen überprüft werden.

4. Verfahren nach einem der Ansprüche 1 bis 3,
bei dem das Deaktivieren von Steuerungseinheiten mit gegenüber der Mehrheit von zueinander redundanten Steuerungseinheiten abweichenden Ausgangsgrößen durch die zugeordneten Kommunikationsgeräte oder selbständig durch die Steuerungseinheiten erfolgt.

5. Verfahren nach Anspruch 4,
bei dem das Deaktivieren von Steuerungseinheiten mit gegenüber der Mehrheit von zueinander redundanten Steuerungseinheiten abweichenden Ausgangsgrößen durch Ignorieren der abweichenden Ausgangsgrößen in den zugeordneten Kommunikationsgeräten erfolgt.

6. Verfahren nach einem der Ansprüche 1 bis 5,
bei dem die zueinander redundanten Steuerungseinheiten untereinander von zugeordneten Kommunikationsgeräten empfangene Eingangsgrößen abgleichen und bei dem Steuerungseinheiten mit gegenüber einer Mehrheit von zueinander redundanten Steuerungseinheiten abweichenden Eingangsgrößen deaktiviert werden.

7. Verfahren nach Anspruch 6,
bei dem sich die Steuerungseinheiten mit gegenüber der Mehrheit von zueinander redundanten Steuerungseinheiten abweichenden Eingangsgrößen selbständig deaktivieren.

8. Verfahren nach Anspruch 7,
bei dem sich die Steuerungseinheiten mit gegenüber der Mehrheit von zueinander redundanten Steuerungseinheiten abweichenden Eingangsgrößen selbständig deaktivieren, indem eine Erzeugung von Ausgangsgrößen eingestellt oder ausgesetzt wird.

9. Verfahren nach einem der Ansprüche 1 bis 8,
bei dem jeweils Paare zueinander redundanter Steuerungseinheiten (101-102; 103-104) vorgesehen sind, bei dem zunächst jeweils ein Paar zueinander redundanter Haupt-Steuerungseinheiten (101-102) aktiviert wird und bei dem bei Abweichungen der durch die zueinander redundanten Haupt-Steuerungseinheiten (101-102) erzeugten Ausgangsgrößen (11-12) jeweils ein Umschalten vom Paar zueinander redundanter Haupt-Steuerungseinheiten (101-102) auf ein Paar zueinander redundanter Reserve-Steuerungseinheiten (103-104) erfolgt.

10. Verfahren nach Anspruch 9,
bei dem sich die zueinander redundanten Haupt-Steuerungseinheiten (101-102) paarweise gegenseitig auf unterschiedliche Eingangs- und/oder Ausgangsgrößen überwachen und bei festgestellten Abweichungen selbständig deaktivieren.

11. Verfahren nach einem der Ansprüche 9 oder 10,
bei dem den Kommunikationsgeräten (201) jeweils zugeordnete Paare von zueinander redundanten Haupt-Steuerungseinheiten (101-102) in eine Liste eingetragen werden und bei dem in die Liste eingetragene ehemalige Haupt-Steuerungseinheiten von einer Verwendung als Reserve-Steuerungseinheiten für die jeweiligen Kommunikationsgeräte ausgeschlossen werden.

12. Verfahren nach einem der Ansprüche 9 bis 11,
bei dem die zugeordneten Kommunikationsgeräte (201-203) bei abweichenden Ausgangsgrößen (11-12) der zueinander redundanten Haupt-Steuerungseinheiten (101-102) und/oder bei einer durch die zueinander redundanten Haupt-Steuerungseinheiten signalisierten Selbst-Deaktivierung von den Haupt-Steuerungseinheiten (101-102) auf die Reserve-Steuerungseinheiten (103-104) umschalten.

13. Verfahren nach einem der Ansprüche 9 bis 12,
bei dem die Ausgangsgrößen der zueinander redundanten Haupt-Steuerungseinheiten zur paarweise gegenseitigen Überwachung über jeweils zumindest 2 disjunkte Pfade zur jeweils anderen Haupt-Steuerungseinheit übermittelt werden und bei dem die zueinander redundanten Haupt-Steuerungseinheiten aktiviert bleiben, solange sie über zumindest einen Pfad mit den eigenen Ausgangsgrößen übereinstimmende Ausgangsgrößen der jeweils anderen Haupt-Steuerungseinheit empfangen.

14. Verfahren nach einem der Ansprüche 9 bis 13,
bei dem die Ausgangsgrößen der zueinander redundanten Haupt-Steuerungseinheiten über jeweils zumindest 2 disjunkte Pfade je Haupt-Steuerungseinheit zu den zugeordneten Kommunikationsgeräten übermittelt werden und bei dem die zueinander redundanten Haupt-Steuerungseinheiten für das jeweilige zugeordnete Kommunikationsgerät aktiviert bleiben, solange das jeweilige zugeordnete Kommunikationsgerät über zumindest 2 Pfade übereinstimmende Ausgangsgrößen beider Haupt-Steuerungseinheiten und über die übrigen Pfade jeweils voneinander abweichende Ausgangsgrößen empfängt.

15. Verfahren nach einem der Ansprüche 1 bis 14,
bei dem das Kommunikationsnetz in mehrere Partitionen unterteilt wird, die vorgebbare Anteile an Systemressourcen von Kommunikationsgeräten umfassen, die der jeweiligen Partition zugeordnet sind, bei dem die Steuerungseinheiten für Benutzer-seitige Kommunikationsdienst-Anforderungen innerhalb der dem jeweiligen Benutzer zugeordneten Partition jeweils einen Pfad zwischen einem ersten Kommunikationsgerät an einem ersten Endknoten und einem zweiten Kommunikationsgerät an einem zweiten Endknoten über dritte Kommunikationsgeräte ermitteln und bei dem die Steuerungseinheiten überprüfen, ob entlang der ermittelten Pfade innerhalb der dem jeweiligen Benutzer zugeordneten Partition während einer geplanten Nutzungsdauer jeweils erforderliche Systemressourcen verfügbar sind.

16. Verfahren nach einem der Ansprüche 1 bis 15,
bei dem die kommunikationsspezifische Eingangsgrößen Latenz-, Jitter-, Datenrate- und/oder Bandbreite-Messwerte und/oder Ereignismeldungen von Routern, Switches und/oder Access Points umfassen.

17. Verfahren nach einem der Ansprüche 1 bis 16,
bei dem sich die zueinander redundanten Steuerungseinheiten (101-103; 101-102, 103-104) gegenüber den zugeordneten Kommunikationsgeräten (201-203 authentisieren und bei dem die zueinander redundanten Steuerungseinheiten erst nach erfolgreicher Authentifizierung Steuerungszugriff auf die zugeordneten Kommunikationsgeräte erhalten.

18. Steuerungseinheit zur Durchführung eines Verfahrens nach einem der Ansprüche 1 bis 17, die dafür ausgestaltet und eingerichtet ist,
- gemeinsam mit zumindest einer redundanten Steuerungseinheit (102-103; 102) Funktionen mehrerer zugeordneter Kommunikationsgeräte (201-203) zu steuern, wobei zueinander redundanten Steuerungseinheiten (101-103; 101-102, 103-104) identisch ausgestaltete und eingerichtete Zustandsautomaten umfassen, die dafür ausgestaltet und eingerichtet sind, in fehlerfreiem Zustand bei identischen Eingangsgrößen identische Ausgangsgrößen (11-13; 11-12) zu erzeugen, wobei die Kommunikationsgeräte (201-203) einem Software Defined Network zugeordnet sind, das eine als Control Plane bezeichnete Kommunikationssteuerungsebene und eine als Data Plane bezeichnete Datenübermittlungsebene umfasst, und wobei die Steuerungseinheiten (101-103; 101-102, 103-104) der Control Plane zugeordnet sind und die Kommunikationsgeräte (201-203) der Data Plane zugeordnet sind,
- für Benutzer-seitige Kommunikationsdienst-Anforderungen (10) jeweils einen Pfad zwischen einem ersten Kommunikationsgerät an einem ersten Endknoten und einem zweiten Kommunikationsgerät an einem zweiten Endknoten über dritte Kommunikationsgeräte zu ermitteln, wobei die dritten Kommunikationsgeräte Router und/oder Switches umfassen und durch die Steuerungseinheiten (101-103; 101-102, 103-104) Flow-Tabellen vorgebbar sind, aus denen Routing-Tabellen und/oder Forwarding-Tabellen für den Steuerungseinheiten jeweils zugeordnete dritte Kommunikationsgeräte ableitbar sind,
- zu überprüfen, ob entlang der ermittelten Pfade während einer geplanten Nutzungsdauer jeweils erforderliche Systemressourcen verfügbar sind,
- für die Kommunikationsdienst-Anforderungen (10) jeweils bei einem positiven Überprüfungsergebnis erforderliche Systemressourcen zu reservieren und Routing- oder Switching-Funktionen der dritten Kommunikationsgeräte entsprechend den ermittelten Pfaden zu steuern,
- von zugeordneten Kommunikationsgeräten (201-203) Messwerte und/oder Ereignismeldungen (21-23) als Eingangsgrößen zu empfangen,
- die eigenen Ausgangsgrößen (11) und die Ausgangsgrößen (12-13; 12) der redundanten Steuerungseinheit (102-103; 102) auf Abweichungen zueinander zu überprüfen,
- bei Abweichungen auf Reserve-Steuerungseinheiten (103-104) umzuschalten oder Steuerungseinheiten (102) mit gegenüber einer Mehrheit von zueinander redundanten Steuerungseinheiten (101, 103) abweichenden Ausgangsgrößen (12) zu deaktivieren.

## Claims

1. Method for operating an industrial automation system communication network comprising a plurality of communication devices, in which
- a plurality of mutually redundant control units (101-103; 101-102, 103-104) control functions of a plurality of assigned communication devices (201-203), wherein the mutually redundant control units comprise identically designed and configured state machines, which, in an error-free state, generate identical output variables (11-13; 11-12) given identical input variables, wherein the communication devices (201-203) are assigned to a Software Defined Network which comprises one communication control plane designated as a Control Plane and one data transmission plane designated as a Data Plane, and wherein the control units (101-103; 101-102, 103-104) are assigned to the Control Plane and the communication devices (201-203) are assigned to the Data Plane,
- the control units (101-103; 101-102, 103-104) for user-side communication service requests (10) each determine a path between a first communication device at a first end node and a second communication device at a second end node via third communication devices, wherein the third communication devices comprise routers and/or switches and the control units (101-103; 101-102, 103-104) specify flow tables, from which routing tables and/or forwarding tables for third communication devices respectively assigned to the control units are derived,
- the control units (101-103; 101-102, 103-104) verify whether necessary system resources are available along the determined paths during a scheduled usage period,
- the control units (101-103; 101-102, 103-104) reserve system resources necessary for the communication service requests (10) in each case in the event of a positive verification result and control routing or switching functions of the third communication devices in accordance with the determined paths,
- the communication devices (201-203) transfer communication-specific input variables (21-23) to all associated redundant control units (101-103; 101-102, 103-104),
- the output variables (11-13; 11-12) generated by the mutually redundant control units (101-103; 101-102, 103-104) are checked for deviations relative to each other,
- in the event of deviations a switchover to reserve control units (103-104) is performed or control units (102) having output variables (12) that deviate with respect to a majority of mutually redundant control units (101, 103) are deactivated.

2. Method according to Claim 1,
in which the state machines of the mutually redundant control units (101-103; 101-102, 103-104) are replicated state machines.

3. Method according to either of Claims 1 or 2,
in which the output variables (11-13; 11-12) generated by the mutually redundant control units (101-103; 101-102, 103-104) are checked for deviations by the assigned communication devices (201-203) or by the control units themselves.

4. Method according to any one of Claims 1 to 3,
in which the deactivation of control units having output variables that deviate with respect to the majority of mutually redundant control units is carried out by the assigned communication devices or by the control units themselves.

5. Method according to Claim 4,
in which the deactivation of control units having output variables that deviate with respect to the majority of mutually redundant control units is carried out by ignoring the deviating output variables in the assigned communication devices.

6. Method according to any one of Claims 1 to 5,
in which the mutually redundant control units compare input variables received from assigned communication devices against one another and in which control units having input variables that deviate with respect to a majority of mutually redundant control units are deactivated.

7. Method according to Claim 6,
in which the control units having input variables that deviate with respect to the majority of mutually redundant control units deactivate themselves.

8. Method according to Claim 7,
in which the control units having input variables that deviate with respect to the majority of mutually redundant control units deactivate themselves by a process of generating output variables being stopped or suspended.

9. Method according to any one of Claims 1 to 8,
in which pairs of mutually redundant control units (101-102; 103-104) are provided, in which one pair of mutually redundant main control units (101-102) is first activated, and in which in the event of deviations of the output variables (11-12) generated by the mutually redundant main control units (101-102) a switchover is performed from the pair of mutually redundant main control units (101-102) to a pair of mutually redundant reserve control units (103-104).

10. Method according to Claim 9,
in which pairs of the mutually redundant main control units (101-102) monitor each other for differing input and/or output variables and deactivate themselves when deviations are found.

11. Method according to either of Claims 9 or 10,
in which pairs of mutually redundant main control units (101-102) that are assigned to the communication devices (201) are entered in a list and in which former main control units entered in the list are excluded from use as reserve control units for the respective communication devices.

12. Method according to any one of Claims 9 to 11,
in which in the event of deviating output variables (11-12) of the mutually redundant main control units (101-102) and/or in the event of a self-deactivation indicated by the mutually redundant main control units, the assigned communication devices (201-203) switch over from the main control units (101-102) to the reserve control units (103-104).

13. Method according to any one of Claims 9 to 12,
in which the output variables of the mutually redundant main control units for the pairwise mutual monitoring are transmitted to the respective other main control unit via in each case at least 2 disjoint paths and in which the mutually redundant main control units remain activated as long as they receive output variables of the respective other main control unit which match their own output variables via at least one path.

14. Method according to any one of Claims 9 to 13,
in which the output variables of the mutually redundant main control units are transmitted to the assigned communication devices via in each case at least 2 disjoint paths per main control unit and in which the mutually redundant main control units for the respective assigned communication device remain activated as long as the respective assigned communication device receives matching output variables from both main control units via at least 2 paths and output variables that differ from each other via the remaining paths.

15. Method according to any one of Claims 1 to 14,
in which the communication network is divided into a plurality of partitions, which comprise specifiable shares of system resources of communication devices that are assigned to the respective partition, in which for user-side communication service requests within the partition assigned to the respective user the control units each determine a path between a first communication device at a first end node and a second communication device at a second end node via third communication devices, and in which the control units verify whether necessary system resources are available along each of the determined paths within the partition assigned to the respective user during a scheduled usage period.

16. Method according to any one of Claims 1 to 15,
in which the communication-specific input variables comprise latency, jitter, data rate and/or bandwidth measurements and/or event messages from routers, switches and/or access points.

17. Method according to any one of Claims 1 to 16,
in which the mutually redundant control units (101-103; 101-102, 103-104) are authenticated against the assigned communication devices (201-203) and in which the mutually redundant control units obtain control access to the assigned communication devices only after successful authentication.

18. Control unit for carrying out a method according to any one of Claims 1 to 17, which is designed and configured
- to control functions of a plurality of assigned communication devices (201-203) jointly with at least one redundant control unit (102-103; 102), wherein mutually redundant control units (101-103; 101-102, 103-104) comprise identically designed and configured state machines, which are designed and configured to generate, in an error-free state, identical output variables (11-13; 11-12) given identical input variables, wherein the communication devices (201-203) are assigned to a Software Defined Network which comprises one communication control plane designated as a Control Plane and one data transmission plane designated as a Data Plane, and wherein the control units (101-103; 101-102, 103-104) are assigned to the Control Plane and the communication devices (201-203) are assigned to the Data Plane,
- for user-side communication service requests (10) to determine in each case a path between a first communication device at a first end node and a second communication device at a second end node via third communication devices, wherein the third communication devices comprise routers and/or switches and the control units (101-103; 101-102, 103-104) can specify flow tables, from which routing tables and/or forwarding tables for third communication devices respectively assigned to the control units can be derived,
- to verify whether necessary system resources are available along the determined paths during a scheduled usage period,
- to reserve system resources necessary for the communication service requests (10) in each case in the event of a positive verification result and to control routing or switching functions of the third communication devices in accordance with the determined paths,
- to receive measurements and/or event messages (21-23) from assigned communication devices (201-203) as input variables,
- to check their own output variables (11) and the output variables (12-13; 12) of the redundant control unit (102-103; 102) for deviations relative to each other,
- in the event of deviations to switch over to reserve control units (103-104) or to deactivate control units (102) having output variables (12) that deviate with respect to a majority of mutually redundant control units (101, 103).

## Revendications

1. Procédé pour faire fonctionner un réseau de communication, comprenant plusieurs appareils de communication, d'un système d'automatisation industriel, dans lequel
- plusieurs unités (101-103 ; 101-102, 103-104) de commande redondantes les unes par rapport aux autres, commande des fonctions de plusieurs appareils (201-203) de communication associés, les unités de commande redondantes les unes par rapport aux autres comprenant des automates d'état conformés et conçus pareillement, qui, dans l'état sans défaut, produisent, à grandeurs d'entrée identiques, des grandeurs (11-13 ; 11-12) de sortie identiques, les appareils (201-203) de communication étant associés à un software defined network, qui comprend un plan de commande de communication désigné comme control plane et un plan de transmission de données désigné comme data plane et les unités (101-103 ; 101-102, 103-104) de commande sont associées au control plane et les appareils (201, 203) de communication sont associés au data plane,
- les unités (101-103 ; 101-102, 103-104) de commande déterminent, pour des demandes (10) de service de communication de la part d'un utilisateur, respectivement, un trajet entre un premier appareil de communication à un premier point nodal et un deuxième appareil de communication à un deuxième point nodal, par l'intermédiaire de troisièmes appareils de communication, les troisièmes appareils de communication comprenant des routers et/ou des switches et il est prescrit, par les unités (101-103 ; 101-102, 103-104) de commande, des tables de flow, dont sont dérivées des tables de routing et/ou des tables de forwarding pour les troisièmes appareils de communication associés chacun aux unités de commande,
- les unités (101-103 ; 101-102, 103-104) de commande contrôlent, si les ressources de système, nécessaires chacune le long des trajets déterminés pendant une durée d'utilisation projetée, sont disponibles,
- les unités (101-103 ; 101-102, 103-104) de commande réservent, pour les demandes (10) de service de communication, respectivement, si le résultat du contrôle est positif, des ressources de système nécessaires et commande, conformément aux trajets déterminés, des fonctions de routing ou de switching des troisièmes appareils de communication,
- les appareils (201-203) de communication transmettent des grandeurs (21-23) d'entrée spécifiques à la communication à toutes les unités (101-103 ; 101-102, 103-104) de commande redondantes associées,
- les grandeurs (11-13 ; 11-12) de sortie, produites par les unités (101-103 ; 101-102, 103-104) de commande redondantes entre elles, sont contrôlées les unes par rapport aux autres, en ce qui concerne des écarts,
- s'il y a des écarts, une commutation à des unités (103-104) de commande de réserve ou une désactivation d'unités (102) de commande est effectuée par des grandeurs (12) de sortie s'écartant par rapport à une majorité d'unités (101, 103) de commande redondantes entre elles.

2. Procédé suivant la revendication 1,
dans lequel les automates d'état des unités (101-103 ; 101-102, 103-104) de commande redondantes entre elles sont des machines d'état répliquées.

3. Procédé suivant l'une des revendications 1 ou 2,
dans lequel les grandeurs (11-13 ; 11-12) de sortie produites par les unités (101-103 ; 101-102, 103-104) de commande redondantes entre elles sont contrôlées, en ce qui concerne les écarts, par les appareils (201-203) de communication associés ou d'une manière autonome par les unités de commande.

4. Procédé suivant l'une des revendications 1 à 3,
dans lequel la désactivation d'unités de commande, ayant des grandeurs de sortie s'écartant par rapport à la majorité d'unités de commande redondantes entre elles, s'effectue par les appareils de communication associés ou d'une manière autonome par les unités de commande.

5. Procédé suivant la revendication 4,
dans lequel la désactivation d'unités de commande, ayant des grandeurs de sortie s'écartant par rapport à la majorité d'unités de commande redondantes entre elles, s'effectue dans les appareils de communication associés en négligeant les grandeurs de sortie, qui s'écartent.

6. Procédé suivant l'une des revendications 1 à 5,
dans lequel les unités de commande redondantes entre elles égalisent entre elles des grandeurs d'entrée reçues d'appareils de communication associés et dans lequel des unités de commande, ayant des grandeurs d'entrée s'écartant par rapport à une majorité d'unités de commande redondantes entre elles, sont désactivées.

7. Procédé suivant la revendication 6,
dans lequel les unités de commande, ayant des grandeurs d'entrée s'écartant par rapport à la majorité d'unités de commande redondantes entre elles, se désactivent de manière autonome.

8. Procédé suivant la revendication 7,
dans lequel les unités de commande, ayant des grandeurs d'entrée s'écartant par rapport à la majorité d'unités de commande redondantes entre elles, se désactivent de manière autonome, par le fait qu'une production de grandeurs de sortie est suspendue ou arrêtée.

9. Procédé suivant l'une des revendications 1 à 8,
dans lequel il est prévu, respectivement, des paires d'unités (101-102 ; 103, 104) de commande redondantes entre elles, dans lequel, d'abord, respectivement, une paire d'unités (101-102) de commande principales redondantes entre elles est activée, et dans lequel, s'il y a des écarts des grandeurs (11-12) de sortie produites par les unités (101-102) de commande principales redondantes entre elles, il se produit, respectivement, une commutation de la paire d'unités (101-102) de commande principales redondantes entre elles à une paire (103-104) d'unités de commande de réserve redondantes entre elles.

10. Procédé suivant la revendication 9,
dans lequel les unités (101-102) de commande principales redondantes entre elles contrôlent par paire, mutuellement, s'il y a des grandeurs d'entrée et/ou de sortie différentes et, si des écarts sont constatés, se désactivent de manière autonome.

11. Procédé suivant l'une des revendications 9 ou 10,
dans lequel des paires, associées chacune aux appareils (201) de communication, d'unités (101-102) de commande principales redondantes entre elles, sont enregistrées dans une liste, et dans lequel des unités de commande principales enregistrées dans la liste sont exclues d'une utilisation comme unités de commande de réserve pour les appareils de communication respectifs.

12. Procédé suivant l'une des revendications 9 à 11,
dans lequel les appareils (201-203) de communication associés commutent, sur les unités (103-104) de commande de réserve, pour des grandeurs (11-12) de sortie, qui s'écartent, des unités (101-102) de commande principales redondantes entre elles ou s'il y a une auto-désactivation, signalée par les unités de commande principales redondantes entre elles, des unités (101-102) de commande principales.

13. Procédé suivant l'une des revendications 9 à 12,
dans lequel les grandeurs de sortie des unités de commande principales redondantes entre elles sont, pour le contrôle mutuel par paire, transmises par, respectivement, au moins deux trajets disjoints à, respectivement, l'autre unité de commande principale, et dans lequel les unités de commande principales redondantes entre elles restent activées, tant qu'elles reçoivent, par au moins un trajet, des grandeurs de sortie coïncidant avec leurs propres grandeurs de sortie de, respectivement, l'autre unité de commande principale.

14. Procédé suivant l'une des revendications 9 à 13,
dans lequel les grandeurs de sortie des unités de commande principales redondantes entre elles sont transmises par, respectivement, au moins deux trajets disjoints, par unité de commande principale, aux appareils de communication associés, et dans lequel les unités de commande principales redondantes entre elles restent activées pour l'appareil de communication associé respectif, tant que l'appareil de communication associé respectif reçoit des grandeurs de sortie, coïncidant par au moins deux trajets, des deux unités de commande principales et par les autres trajets, respectivement, des grandeurs de sortie s'écartant les unes des autres.

15. Procédé suivant l'une des revendications 1 à 14,
dans lequel le réseau de communication est subdivisé en plusieurs partitions, qui comprennent des proportions pouvant être données à l'avance de ressources du système d'appareils de communication, qui sont associés à la partition respective, dans lequel les unités de commande déterminent, pour des demandes de service de communication de la part d'un utilisateur, au sein de la partition associée à l'utilisateur respectif, respectivement, un trajet entre un premier appareil de communication à un premier nœud d'extrémité et un deuxième appareil de communication à un deuxième nœud d'extrémité par l'intermédiaire des troisièmes appareils de communication, et dans lequel les unités de commande contrôlent si, le long des trajets déterminés au sein de la partition associée à l'utilisateur respectif, des ressources de système nécessaires respectivement pendant une durée d'utilisation projetée, sont disponibles.

16. Procédé suivant l'une des revendications 1 à 15,
dans lequel les grandeurs d'entrée spécifiques à une communication comprennent des valeurs de latence, de jitter, de débit de données et/ou de largeur de bande et/ou des messages d'événement de routers, de switches et/ou d'access points.

17. Procédé suivant l'une des revendications 1 à 16,
dans lequel les unités (101-103 ; 101-102, 103-104) de commande redondantes entre elles s'authentifient par rapport aux appareils (201-203) de communication associés et dans lequel les unités de commande redondantes entre elles ne reçoivent, qu'après une authentification couronnée de succès, un accès de commande aux appareils de communication associés.

18. Unité de commande pour effectuer un procédé suivant l'une des revendications 1 à 17, qui est conformée et conçue pour,
- commander, en commun avec au moins une unité (102-103 ; 102) de commande redondante, des fonctions de plusieurs appareils (201-203) de communication associés, des unités (101-103 ; 101-102, 103-104) de commande redondantes entre elles, comprenant des automates d'état conformés et conçus pareillement, qui sont conformés et conçus pour, dans l'état sans défaut, produire, à grandeurs d'entrée identiques, des grandeurs (1-13 ; 11-12) de sortie identiques, les appareils (201-203) de communication étant associés à un software defined network, qui comprend un plan de commande de communication désigné comme control plane et un plan de transmission de données désigné comme data plane et les unités (101-103 ; 101-102, 103-104) de commande sont associées au control plane et les appareils (201, 203) de communication sont associés au data plane,
- déterminer, pour des demandes (10) de service de communication de la part d'un utilisateur, respectivement, un trajet entre un premier appareil de communication à un premier point nodal et un deuxième appareil de communication à un deuxième point nodal, par l'intermédiaire de troisièmes appareils de communication, les troisièmes appareils de communication comprenant des routers et/ou des switches et il est prescrit, par les unités (101-103 ; 101-102, 103-104) de commande, des tables de flow, dont sont dérivées des tables de routing et/ou des tables de forwarding pour les troisièmes appareils de communication associés chacun aux unités de commande,
- pour contrôler, si les ressources de système, nécessaires chacune le long des trajets déterminés pendant une durée d'utilisation projetée, sont disponibles,
- pour des demandes (10) de service de communication, réserver, respectivement, si le résultat du contrôle est positif, des ressources de système nécessaires et commander, conformément aux trajets déterminés, des fonctions de routing ou de switching des troisièmes appareils de communication,
- recevoir, d'appareils (201-203) de communication associés, des valeurs de mesure et/ou des messages (21-23) d'événement comme grandeurs d'entrée,
- contrôler entre elles, en ce qui concerne des écarts, les propres grandeurs (11) de sortie et les grandeurs (12-13 ; 12) de sortie de l'unité (102-103 ; 102) de commande redondante,
- s'il y a des écarts, commuter sur des unités (103-104) de commande de réserve ou désactiver des unités (102) de commande, ayant des grandeurs (12) de sortie s'écartant par rapport à une majorité d'unités (101, 103) de commande redondantes entre elles.
